# EUROPÄISCHE PATENTSCHRIFT

(11) **EP 1 124 714 B1**
(45) Veröffentlichungstag und Bekanntmachung des Hinweises auf die Patenterteilung: **21.01.2004**
(21) Anmeldenummer: 99938186.6
(22) Anmeldetag: 12.06.1999
(51) Int. Cl.: B60T 8/36, B60T 13/68, F16K 31/06

(54) **ELEKTROMAGNETISCHE VORRICHTUNG, INSBESONDERE FÜR EINE SCHLUPFGEREGELTE, HYDRAULISCHE FAHRZEUGBREMSANLAGE**
ELECTROMAGNETIC DEVICE, ESPECIALLY FOR AN ANTI-SLIP, HYDRAULIC VEHICLE BRAKE SYSTEM
DISPOSITIF ELECTROMAGNETIQUE, NOTAMMENT DESTINE A UN SYSTEME DE FREINAGE HYDRAULIQUE ET ANTI-PATINAGE D'UN VEHICULE

(30) Priorität: 28.10.1998 DE 19849667
(43) Veröffentlichungstag der Anmeldung: 22.08.2001
(73) Patentinhaber: ROBERT BOSCH GMBH, 70442 Stuttgart (DE)
(72) Erfinder: WOLFF, Guenter, D-71701 Schwieberdingen (DE); MEGERLE, Friedrich, D-71679 Asperg (DE); OEHLER, Martin, D-74189 Weinsberg (DE); HOFMANN, Dirk, D-71636 Ludwigsburg (DE)
(86) Internationale Anmeldenummer: PCT/DE1999/001726
(87) Internationale Veröffentlichungsnummer: WO 2000/024620

(56) Entgegenhaltungen:
- WO-A-95/08463
- DE-A- 19 535 235
- DE-A- 19 540 040
- DE-A- 19 621 229
- DE-A- 19 805 843

## Beschreibung

### Stand der Technik

Die Erfindung geht aus von einer elektromagnetischen Vorrichtung, insbesondere für eine schlupfgeregelte, hydraulische Fahrzeugbremsanlage, nach der Gattung des Patentanspruchs 1.

Eine solche Vorrichtung ist aus der EP 0 675 030 A2 bekannt. Ein dort verwendeter Ventilblock hat mehrere Aufnahmebohrungen, in welchen erste, in der stromlosen Grundstellung geschlossene Magnetventile und zweite, in der stromlosen Grundstellung offene Magnetventile an Ventilträgern aufgenommen sind. Die ersten und zweiten Magnetventile haben je einen hydraulischen Teil mit einem von einem Magnetanker gesteuerten Ventilschließglied, welches relativ zu einem von einem Ventiisitzträger gehaltenen Ventilsitzkörper und einem Polstück beweglich ist, und je einen elektrischen Teil mit einer Magnetspule, welche in elektrisch erregtem Zustand mit dem Magnetanker derart zusammenwirkt, daß das erste Magnetventil geöffnet und das zweite Magnetventil geschlossen wird.

Zur Aufnahme der ersten und zweiten Magnetventile in den Aufnahmebohrungen des bekannten Ventilblocks ist eine Halteplatte vorgesehen, welche jeweils den Ventilträger in der Aufnahmebohrung hält und mit dem Ventilblock verschraubt ist. Die Halteplatte hat Durchgangsbohrungen, durch weiche Führungshülsen der Magnetventile ragen. Eine Magnetspule ist jeweils auf den aus der Halteplatte ragenden Teil einer Führungshülse aufgesetzt und umschließt sie. Die Magnetspule wird von einem Joch umgriffen.

In einer Führungshülse sind jeweils ein Polstück, eine Ventilfeder und ein Magnetanker mit Schließkörper eines Sitzventils aufgenommen. Die Führungshülse besteht aus einem nicht-ferromagnetischen Material und ist endseitig zu einem Flansch aufgeweitet, der stirnseitig an einem Ventilsitzträger anliegt und vom Ventilträger übergriffen ist. Der Ventilträger und der Ventilsitzträger sind durch eine Bördelverbindung miteinander verbunden.

Die bekannte Vorrichtung hat den Nachteil, daß die Magnetventile nicht als komplett vormontierte Baueinheiten in die Aufnahmebohrungen eingesetzt werden können, da zunächst die Führungshülse zusammen mit dem Ventilträger und dem Ventilsitzträger durch die Halteplatte in der Aufnahmebohrung fixiert und dann erst die Magnetspule zusammen mit dem Joch auf die Führungshülse aufgesetzt werden muß.

Darüber hinaus sind die ersten und zweiten Magnetventile relativ lang und ragen aus den Aufnahmebohrungen des Ventilblocks heraus, wodurch das den Ventilblock tragende Steuergerät der bekannten elektromagnetischen Vorrichtung relativ hoch baut. Außerdem ist die Einbautiefe und damit die Einbausteifigkeit der weit aus den Aufnahmebohrungen ragenden Führungshülsen, welche die aus der Bewegung der Magnetanker resultierenden dynamischen Kräfte aufnehmen, gering.

Schließlich besteht die Führungshülse aus nicht-ferromagnetischem Material und ist innerhalb des Haupt-Magnetflusses angeordnet. Dies hat den Nachteil, daß die Führungshülse einen hohen magnetischen Widerstand darstellt und der Magnetfluss dadurch geschwächt wird.

### Vorteile der Erfindung

Die erfindungsgemäße elektromagnetische Vorrichtung mit den Merkmalen des Patentanspruchs 1 hat demgegenüber den Vorteil, daß durch das einstückige Ventilgehäuse, welches sämtliche Magnetventilbauteile umschließt, die ersten und zweiten Magnetventile jeweils als komplett vormontierte Einheiten in die Aufnahmebohrungen eingesetzt werden können. Außerdem ergibt sich hierdurch eine hohe Eigensteifigkeit der Magnetventile, was insbesondere dann von Vorteil ist, wenn sie in den Aufnahmebohrungen unter großer Krafteinwirkung verstemmt werden und die hohe Eigensteifigkeit verhindert, daß sich das voreingestellte Ventilspiel durch Relativbewegungen von Magnetventilbauteilen zueinander ändert oder daß der Magnetanker in seiner Führung verklemmt. Da für beide Magnetventilarten, stromlos offen und stromlos geschlossen, jeweils das gleiche einstückige Ventilgehäuse verwendet wird, reduziert sich die Anzahl unterschiedlicher Bauteile, was sich günstig auf die Fertigungskosten auswirkt.

Weitere Vorteile ergeben sich aus der versenkten Anordnung der Magnetventile in den Aufnahmebohrungen des Ventilblocks. Zum einen resultiert hieraus eine höhere Einbausteifigkeit der Magnetventile in den Aufnahmebohrungen, zum ändern sind hierdurch auch die wärmeerzeugenden Magnetspulen versenkt angeordnet und die Wärmeableitung kann durch den Ventilblock erfolgen. Durch diese Maßnahme können wärmeempfindliche elektronische Steuerbauteite in direktem Stirnkontakt zu den versenkten Magnetventilen angeordnet werden, wodurch sich die Baugröße des Steuergeräts der Vorrichtung reduziert.

Schließlich hat der nicht-ferromagnetische Distanzring eine vorteilhafte Doppelfunktion. Einerseits dichtet er den mit Druckmedium beaufschlagten hydraulischen Teil der Magnetventile, welcher den Magnetanker, das Ventilschließglied, den Ventilsitzträger und das Polstück beinhaltet, gegenüber dem elektrischen Teil mit der Magnetspule ab. Andererseits liegt er durch seine Anordnung zwischen der zum Ventilsitz weisenden Stirnseite der Magnetspule und der Trennebene zwischen dieser Magnetspule und dem zugeordneten Polstück nicht innerhalb des Haupt-Magnetfeldes, wodurch sein auf das Magnetfeld wirkender magnetischer Widerstand entsprechend gering ist. Zusätzlich schließt der nicht-ferromagnetische Distanzring die Magnetfeldlinien zum Ventilgehäuse nicht kurz, sondern sorgt dafür, daß diese den Magnetanker des ersten Magnetventils bzw. die Polscheibe des zweiten Magnetventils durchdringen können.

Durch die Kombination der genannten Maßnahmen ergibt sich insgesamt eine sehr steife und kurze Bauweise der ersten und zweiten Magnetventile, wodurch das Steuergerät der elektromagnetischen Vorrichtung klein ausfällt. Außerdem bestehen die Magnetventile aus weniger Bauteilen.

Durch die in den Unteransprüchen aufgeführten Maßnahmen sind vorteilhafte Weiterbildungen und Verbesserungen der im Patentanspruch 1 angegebenen elektromagnetischen Vorrichtung möglich.

Besonders vorteilhaft ist, daß die Ventilsitzkörper der ersten und zweiten Magnetventile baugleich und jeweils mit dem Ventilsitz einstückig ausgebildet sind. Hierdurch wird die Anzahl unterschiedlicher Bauteile weiter verringert.

Eine besonders zu bevorzugende Weiterbildung der Erfindung sieht vor, daß dem Ventilgehäuse und dem Polkern ein erster nichtferromagnetischer Distanzring in radialer Richtung zwischengeordnet ist, welcher eine zum ersten Magnetanker weisende Stirnfläche des Polkerns mit einem stirnseitigen Ringabschnitt axial überragt, an welchem der erste Magnetanker anliegt, wenn das erste Magnetventil geöffnet ist. Hierdurch wird zwischen dem Polstück und dem Magnetanker ein Restluftspalt gewährleistet, welcher ein magnetisches Kleben des Magnetankers am Polstück verhindert.

### Zeichnungen

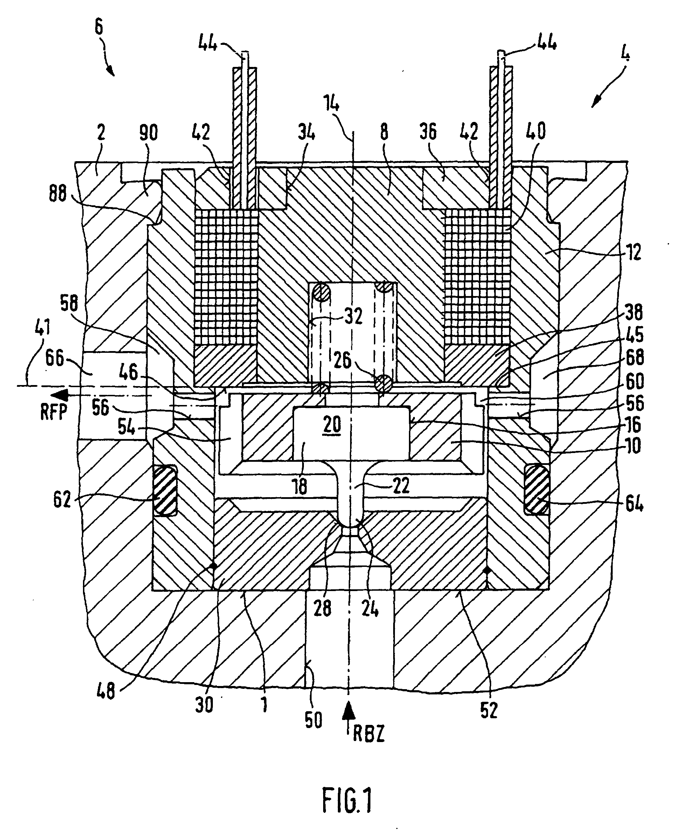

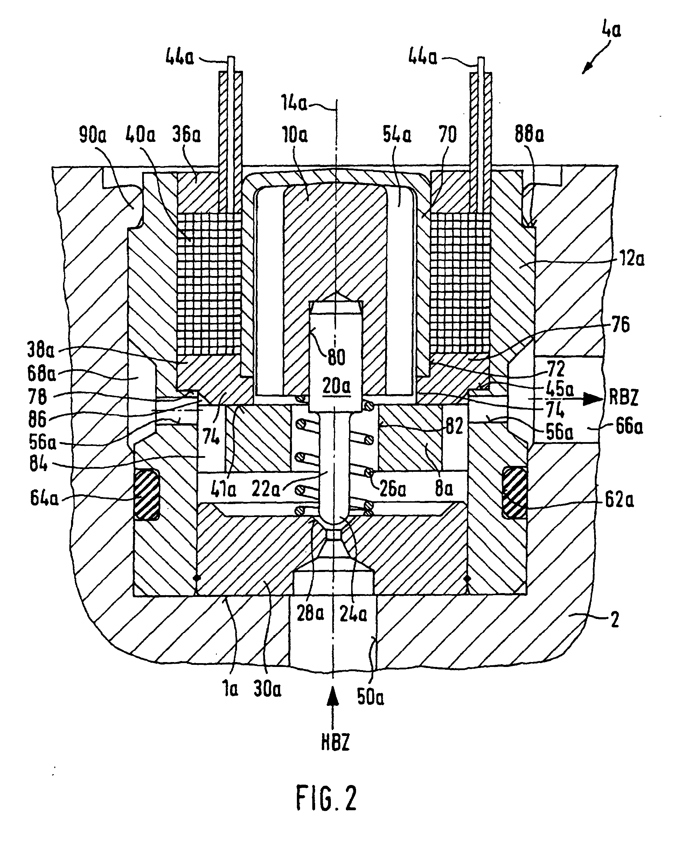

Ausführungsbeispiele der Erfindung sind in den Zeichnungen dargestellt und in der nachfolgenden Beschreibung näher erläutert. Es zeigen Figur 1 einen Längsschnitt durch ein erstes, in der stromlosen Grundstellung geschlossenes Magnetventil einer elektromagnetischen Vorrichtung gemäß der Erfindung. Figur 2 zeigt einen Längsschnitt durch ein zweites, in der stromlosen Grundstellung offenes Magnetventil einer elektromagnetischen Vorrichtung gemäß der Erfindung.

### Beschreibung der Ausführungsbeispiele

Das in Fig.1 in einer ersten Aufnahmebohrung 1 eines Ventilblocks 2 dargestellte erste Magnetventil 4 bildet einen Teil eines im übrigen nicht dargestellten Steuergeräts einer bevorzugten Ausführungsform einer elektromagnetischen Vorrichtung 6 gemäß der Erfindung zum Einsatz in schlupfgeregelten Bremsanlagen von Kraftfahrzeugen. Das erste Magnetventil 4 ist ein 212-Wege-Auslaßventil, welches in seiner stromlosen Grundstellung den Rückfluß von Bremsflüssigkeit z.B. aus einem Radbremszylinder RBZ zu einer Rückförderpumpe RFP sperrt.

Das erste Magnetventil 4 weist kopfseitig einen Polkern 8 auf, weichem sich in axialer Richtung ein erster Magnetanker 10 mit geringem axialem Abstand anschließt, dessen Höhe klein gegenüber seinem Durchmesser ist. Der erste Magnetanker 10 wird durch ein einstückiges Ventilgehäuse 12 entlang einer Magnetventilachse 14 beweglich geführt und hat eine mittige Stufenbohrung 16, in welche die zylindrische Basis 18 eines ersten Ventilschließglieds 20 eingesetzt ist. Von der Basis 18 des ersten Ventilschließglieds 20 ragt ein vom Polkern 8 wegweisender erster Dichtstößel 22 weg, dessen endseitiger erster Schließkörper 24 halbkugelförmig ausgebildet ist. Der erste Schließkörper 24 wird durch den Druck einer sich zwischen dem Polkern 8 und dem ersten Magnetanker 10 abstützenden ersten Ventilfeder 26 in einen hohlkegelförmigen Ventilsitz 28 gedrückt, welcher einstückig mit einer bodenseitigen Ventilsitzplatte 30 ausgeführt ist. Das erste Magnetventil 4 befindet sich dann in seiner stromlos geschlossenen Grundstellung. Die erste Ventilfeder 26 ist vorzugsweise eine Schraubenfeder, welche in einer Sacklochbohrung 32 im Polkern 8 versenkt ist. Um magnetisches Kleben zwischen dem ersten Magnetanker 10 und dem Ventilgehäuse 12 zu vermeiden, ist die radial äußere Umfangsfläche des ersten Magnetankers 12 mit einer nicht-ferromagnetischen Beschichtung versehen, vorzugsweise mit einer Chromschicht. Der erste Magnetanker 10 bildet zusammen mit dem Polkern 8, dem ersten Ventilschließglied 20 und der Ventilsitzplatte 30 einen hydraulischen Teil des ersten Magnetventils 4.

Der Polkern 8 hat an seinem kopfseitigen Ende eine radial äußere Ringstufe 34, in welche eine erste Deckscheibe 36 eingreift, und wird an seinem zum ersten Magnetanker 10 weisenden Ende von einem ersten, nicht-ferromagnetischen Distanzring 38 umgriffen. Eine erste Magnetspule 40 ist dem ersten, nicht-ferromagnetischen Distanzring 38 und der ersten Deckscheibe 36 axial sowie dem Ventilgehäuse 12 und dem Polkern 8 radial zwischengeordnet. Im weiteren ist der erste, nicht-ferromagnetische Distanzring 38 zwischen einer zum Ventilsitz 28 weisenden Stirnseite der ersten Magnetspule 40 und einer Trennebene 41 zwischen der ersten Magnetspule 40 und dem Polkern 8 angeordnet.

Die erste Deckscheibe 36 weist zwei axiale Durchgangsbohrungen 42 auf, durch welche sich Anschlüsse 44 der ersten Magnetspule 40 axial erstrecken. Der erste, nicht-ferromagnetische Distanzring 38 steht mit der unteren Stirnseite der ersten Magnetspule 40 und mit einem radial inneren Absatz 45 des Ventilgehäuses 12 in Verbindung. Außerdem ist er dem Ventilgehäuse 12 und dem Polkern 8 radial zwischengeordnet. Die erste Magnetspule 40, die erste Deckscheibe 36 und die Anschlüsse 44 der ersten Magnetspule 40 bilden zusammen einen elektrischen Teil des ersten Magnetventils 4.

Der hydraulische und der elektrische Teil, und damit sämtliche Bauteile des ersten Magnetventils 4, werden vom einstückigen Ventilgehäuse 12 radial vollständig umschlossen. Der erste, nicht-ferromagnetische Distanzring 38 hat einen stirnseitigen Ringabschnitt 46, welcher eine zum ersten Magnetanker 10 weisende Stirnfläche des Polkerns 8 in axialer Richtung überragt und vorzugsweise in der Trennebene 41 liegt. An diesem Ringabschnitt 46 liegt der erste Magnetanker 10 in Offenstellung an. Hierdurch entsteht zwischen dem Polkern 8 und dem ersten Magnetanker 10 ein Restluftspalt, welcher ein magnetisches Kleben des ersten Magnetankers 10 am Polkern 8 verhindert.

Der erste, nicht-ferromagnetische Distanzring 38 ist an seiner radial inneren Umfangsfläche mit dem Polkern 8 und an seiner radial äußeren Umfangsfläche mit dem Ventilgehäuse 12 z.B. durch eine Hartlötung verbunden und dichtet so den elektrischen Teil gegenüber dem hydraulischen Teil des ersten Magnetventils 4 ab. Andererseits liegt er durch seine stirnseitige Anordnung an der ersten Magnetspule 40 nicht im Hauptfeld des Magnetflusses, wodurch sein auf das Magnetfeld wirkender magnetischer Widerstand entsprechend gering ist. Vorzugsweise ist der erste, nicht-ferromagnetische Distanzring 38 paramagnetisch oder diamagnetisch. Da der erste, nicht-ferromagnetische Distanzring 38 die Magnetfeldlinien nicht lenkt, sorgt er dafür, daß diese den ersten Magnetanker 10 durchdringen können, ohne daß ein magnetischer Kurzschluß zwischen dem Polkern 8 und dem Ventilgehäuse 12 entsteht.

Die Ventilsitzplatte 30 ist in das Ventilgehäuse 12 bodenseitig eingepreßt, wodurch der Ventilhub einstellbar ist. Zusätzlich ist die Ventilsitzplatte 30 durch eine umlaufende, in Fig.1 als Raute dargestellte Laserschweißnaht 48 mit dem Ventilgehäuse 12 verbunden. Die Höhe der Ventilsitzplatte 30 ist klein gegenüber ihrem Durchmesser. Der in der Ventilsitzplatte ausgebildete Ventilsitz 28 ist endseitig im Durchmesser erweitert und kommuniziert mit einem Einlaßkanal 50 im Ventilblock 2, welcher in den Boden 52 der ersten Aufnahmebohrung 1 mündet.

Bei elektrisch erregter erster Magnetspule 40 wird eine magnetische Kraft auf den axial beweglichen ersten Magnetanker 10 zum Polkern 8 hin ausgeübt, wodurch sich der erste Magnetanker 10 gegen die Federkraft der ersten Ventilfeder bewegt und den ersten Schließkörper 24 vom Ventilsitz 28 abhebt. Der magnetische Kreis schließt sich dann vom Polkern 8 über den ersten Magnetanker 10, das Ventilgehäuse 12 und die erste Deckscheibe 36, wobei sich das erste Magnetventil 4 in Offenstellung befindet und Bremsflüssigkeit vom Einlaßkanal 50 durch den Ventilsitz 28 oder in umgekehrter Richtung strömen kann.

Der erste Magnetanker 10 weist an seiner radial äußeren Umfangsfläche axiale Nuten 54 auf, durch welche die den Ventilsitz 28 passierende Bremsflüssigkeit zwei Querbohrungen 56 im Ventilgehäuse 12 zuströmt, welche in den Boden einer in der äußeren Umfangswand des Ventilgehäuses 12 gebildeten ersten Ringausnehmung 58 münden. Zusätzlich hat der erste Magnetanker 10 an seinem dem Polkern 8 zugewandten Ende eine einen Ringkanal bildende Ringstufe 60, durch welche Bremsflüssigkeit strömen kann, wenn er am Ringabschnitt 46 des ersten, nicht-ferromagnetischen Distanzrings 38 anliegt. Die Ringstufe 60 stellt einen Strömungsquerschnitt zur Verfügung, wenn die Nuten 54 des ersten Magnetankers 10 und die Querbohrungen 56 im Ventilgehäuse 12 zueinander versetzt sind.

Die Querbohrungen 56 liegen im wesentlichen in einer Querebene mit der polkemseitigen Stimfläche des ersten Magnetankers 10, wenn das erste Magnetventil 4 geschlossen ist. Diese Maßnahme trägt ebenfalls dazu bei, daß das erste Magnetventil 4 kurz baut, da bei solchen, mit Höhenabstand zum Boden 52 der ersten Aufnahmebohrung 1 angeordneten Querbohrungen 56 die unterhalb dieser verbleibende Baulänge des Ventilgehäuses 12 für die Unterbringung einer zweiten äußeren Ringausnehmung 62 ausreicht, in welcher ein O-Ring 64 die beiden Kanäle 50 und 66 gegeneinander abdichtet.

Zwischen der ersten Ringausnehmung 58 des Ventilgehäuses 12 und der radial inneren Umfangswand der ersten Aufnahmebohrung 1 ist ein Ringraum 68 gebildet, durch welchen die Bremsflüssigkeit dem Auslaßkanal 66 zuströmt, welcher in die Umfangswand der ersten Aufnahmebohrung 1 mündet und quer zur Magnetventilachse 14 angeordnet ist. Die Strömung der Bremsflüssigkeit erfolgt in Offenstellung des ersten Magnetventils 4 daher vom Einlaßkanal 50 durch den Ventilsitz 28, durch die axialen Nuten 54 und die Ringstufe 60 des ersten Magnetankers 10, durch die Querbohrungen 56 im Ventilgehäuse 12, durch den Ringraum 68 und von dort schließlich in den Auslaßkanal 66. Alternativ kann die Strömungsrichtung durch das erste Magnetventil 4 auch umgekehrt werden.

In Fig.2 ist ein zweites, in der stromlosen Grundstellung offenes Magnetventil 4a in einer zweiten Aufnahmebohrung 1 a des Ventilblocks 2 dargestellt. Das zweite Magnetventil 4a ist ein 2/2-Wege-Einlaßventil, welches in der offenen Grundstellung den Fluß von Bremsflüssigkeit z.B. von einem Hauptbremszylinder HBZ zu einem Radbremszylinder RBZ ermöglicht.

Das zweite Magnetventil 4a hat kopfseitig eine von einem Ventilgehäuse 12a umschlossene, nach unten offene Führungshülse 70, in welcher ein zweiter Magnetanker 10a axial beweglich geführt ist. Die Führungshülse 70 besteht aus ferromagnetischem Material mit geringem magnetischem Widerstand. Der zweite Magnetanker 10a hat ebenfalls eine nicht-ferromagnetische Beschichtung, vorzugsweise aus Chrom, um magnetisches Kleben an der Führungshülse 70 zu vermeiden.

Die Führungshülse 70 greift mit ihrem offenen Ende in eine radial innere Ringstufe 72 eines zweiten, nicht-ferromagnetischen Distanzrings 38a ein, dessen Endabschnitt 74 eine axiale Führungsverlängerung der Führungshülse 70 bildet. Eine zweite Magnetspule 40a ist einer zweiten, die Führungshülse 70 radial umgreifenden Deckscheibe 36a und dem zweiten, nicht-ferromagnetischen Distanzring 38a axial und dem Ventilgehäuse 12a und einem die Ringstufe 72 enthaltenden Anfangsabschnitt 76 des zweiten, nicht-ferromagnetischen Distanzrings 38a radial zwischengeordnet. Der zweite, nicht-ferromagnetische Distanzring 38a hat außerdem einen radial äußeren Absatz 78, welcher in einem hierzu komplementären, radial inneren Absatz 45a des Ventilgehäuses 12a aufgenommen ist. Im weiteren ist der zweite, nicht-ferromagnetische Distanzring 38a zwischen einer zum Ventilsitz 28a weisenden Stirnseite der zweiten Magnetspule 40a und einer Trennebene 41 a zwischen der zweiten Magnetspule 40a und einer Polscheibe 8a angeordnet. Die zweite Deckscheibe 36a ist zwischen der Führungshülse 70 und dem Ventilgehäuse 12a eingepreßt.

Der zweite Magnetanker 10a weist ein als Dichtstößel 22a ausgebildetes zweites Ventilschließglied 20a auf, weiches mit seinem einen Ende in eine endseitige Sackbohrung 80 des zweiten Magnetankers 10a eingesetzt und an seinem freien Ende mit einem zweiten, halbkugelförmigen Schließkörper 24a versehen ist. Der zweite Dichtstößel 22a ragt durch eine mittige Durchgangsöffnung 82 der vorzugsweise in der Trennebene 41 mit dem zweiten, nicht-ferromagnetischen Distanzring 38a in Kontakt stehenden Polscheibe 8a, welche in das Ventilgehäuse 12a eingepreßt ist.

Der zweite, halbkugelförmige Schließkörper 24a liegt in der offenen Grundstellung des zweiten Magnetventils 4a dem hohlkegelförmigen Ventilsitz 28a mit axialem Abstand gegenüber; welcher einstükkig mit einer den Boden des zweiten Magnetventils 4a bildenden Ventilsitzplatte 30a ausgeführt ist. Das Ventilgehäuse 12a und die Ventilsitzplatte 30a des zweiten Magnetventils 4a sind jeweils baugleich mit dem Ventilgehäuse 12 und der Ventilsitzplatte 30 des ersten Magnetventils 4. Darüber hinaus ist auch die zweite Aufnahmebohrung 1 a mit der ersten Aufnahmebohrung 1 identisch.

Eine zweite Ventilfeder 26a stützt sich mit ihrem einen Ende an der polscheibenseitigen Stirnseite des zweiten Magnetankers 10a und durch die mittige Durchgangsöffnung 82 der Polscheibe 8a ragend mit ihrem anderen Ende an der Ventilsitzplatte 30a ab und drückt den zweiten Magnetanker 10a von der Ventilsitzplatte 30a weg in Offenstellung. Dann kann Bremsflüssigkeit ausgehend vom Einlaßkanal 50a im Ventilblock 2 durch den Ventilsitz 28a und durch die mittige Durchgangsöffnung 82 der Polscheibe 8a bzw. durch zwei radial äußere, in axialer Richtung verlaufende Nuten 84 der Polscheibe 8a hindurch zwei Querbohrungen 56a im Ventilgehäuse 12a zuströmen. Die Abströmung erfolgt über einen Ringraum 68a und einen Auslaßkanal 66a in der zweiten Aufnahmebohrung 1 a. Durch einen in einer zweiten äußeren Ringausnehmung 62a des Ventilgehäuses 12a angeordneten O-Ring 64a sind der Einlaß- und der Auslaßkanal 50a, 66a voneinander hydraulisch getrennt.

Ein radial äußerer Teil der zum zweiten Magnetanker 10a weisenden Stimfläche der Polscheibe 8a befindet sich im wesentlichen in einer Querebene mit den Mittelachsen der beiden Querbohrungen 56a im Ventilgehäuse 12a. Damit der Strömungsquerschnitt der aus den axialen Nuten 84 der Polscheibe 8a austretenden Bremsflüssigkeit nicht durch den zweiten, nicht-ferromagnetischen Distanzring 38a reduziert wird, hat dieser an seinem radial äußeren, unteren Rand eine im Querschnitt dreieckförmige Ringausnehmung 86. Um während der Axialbewegung des zweiten Magnetankers 10a innerhalb der Führungshülse 70 einen Druckausgleich zu ermöglichen, hat dieser an seinem radial äußeren Umfang ebenfalls in axialer Richtung verlaufende Nuten 54a.

Analog zum ersten Magnetventil 4 dichtet auch der zweite, nicht-ferromagnetische Distanzring 38a den elektrischen Teil des zweiten Magnetventils 4a bestehend aus der zweiten Deckscheibe 36a, der zweiten Magnetspule 40a und deren Anschlüssen 44a gegenüber dem von Bremsflüssigkeit durchströmten hydraulischen Teil des zweiten Magnetventils 4a ab, welcher die Führungshülse 70, den zweiten Magnetanker 10a, das zweite Ventilschließglied 20a, die Polscheibe 8a und die Ventilsitzplatte 30a beinhaltet. Hierzu ist der zweite, nicht-ferromagnetische Distanzring 38a jeweils z.B. durch eine Hartlötung mit dem Ventilgehäuse 12a und der Führungshülse 70 verbunden.

Da der zweite, nicht-ferromagnetische Distanzring 38a zwischen der zum Ventilsitz 28a weisenden Stirnseite der zweiten Magnetspule 40a und der Trennebene 41a zwischen der zweiten Magnetspule 40a und der Polscheibe 8a angeordnet ist, wirkt er auf die Verteilung der Magnetfeldlinien in analoger Weise wie der erste, nicht-ferromagnetische Distanzring 38. Insbesondere sorgt er für eine magnetische Durchdringung der Polscheibe 8a ohne daß es zu einem magnetischen Kurzschluß zwischen dem zweiten Magnetanker 10a und dem Ventilgehäuse 12a kommt.

Bei erregter zweiter Magnetspule 40a wird eine magnetische Kraft auf den axial beweglichen, zweiten Magnetanker 10a zur Polscheibe 8a hin ausgeübt, wodurch sich der zweite Magnetanker 10a gegen die Federkraft der zweiten Ventilfeder 26a bewegt und den zweiten Schließkörper 24a in den Ventilsitz 28a drückt. Der magnetische Kreis schließt sich dann vom zweiten Magnetanker 10a über die Polscheibe 8a, das Ventilgehäuse 12a, die zweite Deckscheibe 36a und die Führungshülse 70, wobei sich das zweite Magnetventil 4a in der geschlossenen Stellung befindet. Hierbei ist der zweite Dichtstößel 22a derart lang, daß der zweite Magnetanker 10a in der geschlossenen Ventilstellung noch einen geringen axialen Abstand zur Polscheibe 8a aufweist.

Wie Fig.1 und 2 zeigen, ist jeweils die gesamte Länge der ersten und zweiten Magnetventile 4, 4a in den ersten und zweiten Aufnahmebohrungen 1, 1a aufgenommen, wobei jeweils nur die Anschlüsse 44, 44a der ersten und zweiten Magnetspulen 40, 40a aus den Aufnahmebohrungen 1, 1a ragen. Die ersten und zweiten Magnetventile 4, 4a sind in den Aufnahmebohrungen 1, 1a verstemmt, indem jeweils vom gesamten Bohrungsrand einer Aufnahmebohrung 1, 1a her Werkstoff gegen einen endseitigen, radial äußeren Absatz 88, 88a des Ventilgehäuses 12, 12a gedrängt wird. Hierdurch entsteht jeweils ein den Absatz 88, 88a des Ventilgehäuses 12, 12a überdeckender Werkstoffwulst 90, 90a, welcher die ersten und zweiten Magnetventile 4, 4a in den Aufnahmebohrungen 1, 1a fixiert. Zusätzlich bewirkt die Verstemmung, daß der von Bremsflüssigkeit durchströmte Ringraum 68, 68a zum Kopf des Magnetventils hin ohne zusätzliche Dichtungen druck- und fluiddicht abgedichtet ist.

Die ersten und zweiten Magnetspulen 40, 40a haben jeweils eine hohe Windungszahl und ihr Durchmesser ist relativ klein, so daß eine hohe magnetische Feldstärke bei gleichzeitig geringer Erwärmung entsteht. Zudem sind im Bereich der Magnetspulen 40, 40a in einer Ebene quer zur Magnetventilachse 14, 14a die Eisenquerschnitte gegenüber den Spulenquerschnitten etwa gleich groß, so daß sich im Magnetanker 10, 10a jeweils keine magnetischen Sättigungseffekte einstellen.

## Patentansprüche

1. Elektromagnetische Vorrichtung (6), insbesondere für eine schlupfgeregelte, hydraulische Fahrzeugbremsanlage, mit mindestens einem ersten, in seiner stromlosen Grundstellung geschlossenen Magnetventil (4) und mit mindestens einem zweiten, in seiner stromlosen Grundstellung offenen Magnetventil (4a), wobei die ersten und zweiten Magnetventile (4, 4a) ein Ventilgehäuse (12, 12a) haben, in Aufnahmebohrungen (1, 1a) eines Ventilblocks (2) aufgenommen sind und je ein von einem Magnetanker (10, 10a) gesteuertes Ventilschließglied (20, 20a) aufweisen, welches relativ zu einem von einem Ventilsitzträger (30, 30a) getragenen ventilsitz (28, 28a) und zu einem Polstück (8, 8a) beweglich ist, und je eine Magnetspule (40, 40a), welche in elektrisch erregtem Zustand mit dem Magnetanker (10, 10a) derart zusammenwirkt, dass das erste Magnetventil (4) geöffnet und das zweite Magnetventil (4a) geschlossen wird, **dadurch gekennzeichnet, dass** die ersten und zweiten Magnetventile (4, 4a) baugleiche, einstückige Ventilgehäuse (12, 12a) aufweisen, in welchen jeweils sämtliche Magnetventilbauteile im wesentlichen ohne axialen Überstand aufgenommen sind, und dass jeweils die gesamte Länge der ersten und zweiten Magnetventile (4, 4a) in den Aufnahmebohrungen (1, 1a) des Ventilblocks (2) versenkt ist, und dass zwischen einer zum Ventilsitz (28, 28a) weisenden Stirnseite mindestens einer Magnetspule (40, 40a) und einer Trennebene (41,41a), welche zwischen dem Polstück (8, 8a) und dem Magnetanker (10, 10a) des ersten und zweiten Magnetventils (4, 4a) verläuft, ein nicht-ferromagnetischen Distanzring (38, 38a) angeordnet ist.

2. Elektromagnetische Vorrichtung nach Anspruch 1, **dadurch gekennzeichnet, daß** das erste Magnetventil (4) kopfseitig einen Polkern (8) aufweist, welchem sich ein erster, durch das Ventilgehäuse (12) axial beweglich geführter Magnetanker (10) mit axialem Abstand anschließt, welcher an seiner vom Polkern (8) wegweisenden Stirnseite ein als Dichtstößel ausgebildetes erstes Ventilschließglied (20) hat, welches durch den Druck einer sich zwischen dem Polkern (8) und dem ersten Magnetanker (10) abstützenden ersten Ventilfeder (26) in den Ventilsitz (28) gedrückt ist, wenn das erste Magnetventil (4) geschlossen ist.

3. Elektromagnetische Vorrichtung nach Anspruch 2, **dadurch gekennzeichnet, daß** dem Ventilgehäuse (12) und dem Polkern (8) ein erster nichtferromagnetischer Distanzring (38) radial zwischengeordnet ist, welcher eine zum ersten Magnetanker (10) weisende Stirnfläche des Polkerns (8) mit einem Ringabschnitt (46) axial überragt, an weichem der erste Magnetanker (10) anliegt, wenn das erste Magnetventil (4) geöffnet ist.

4. Elektromagnetische Vorrichtung nach den Ansprüchen 2 und 3, **dadurch gekennzeichnet, daß** eine erste Magnetspule (40) einer ersten, in eine radial äußere Ringstufe (34) des Polkerns (8) eingreifenden Deckscheibe (36) und der ersten, nicht-ferromagnetischen Distanzscheibe (38) axial sowie dem Ventilgehäuse (12) und dem Polkern (8) radial zwischengeordnet ist.

5. Elektromagnetische Vorrichtung nach Anspruch 4, **dadurch gekennzeichnet, daß** bei elektrischer Erregung der ersten Magnetspule (40) der magnetische Kreis vom Polkern (8) über den ersten Magnetanker (10), das Ventilgehäuse (12) und die erste Deckscheibe (36) geschlossen ist.

6. Elektromagnetische Vorrichtung nach einem der vorhergehenden Ansprüche, **dadurch gekennzeichnet, daß** das zweite Magnetventil (4a) kopfseitig eine vom Ventilgehäuse (12a) umschlossene, nach unten offene Führungshülse (70) aufweist, in welcher ein zweiter Magnetanker (10a) axial beweglich geführt ist.

7. Elektromagnetische Vorrichtung nach Anspruch 6, **dadurch gekennzeichnet, daß** die Führungshülse (70) mit ihrem offenen Ende in eine radial innere Ringstufe (72) eines zweiten, nicht-ferromagnetischen Distanzrings (38a) eingreift, dessen Endabschnitt (74) eine axiale Führungsverlängerung der Führungshülse (70) bildet.

8. Elektromagnetische Vorrichtung nach Anspruch 7, **dadurch gekennzeichnet, daß** eine zweite Magnetspule (40a) einer kopfseitigen, die Führungshülse (70) radial umgreifenden Deckscheibe (36a) und dem zweiten, nicht-ferromagnetischen Distanzring (38a) axial sowie dem Ventilgehäuse (12) und einem die Ringstufe (72) enthaltenden Anfangsabschnitt (76) der Führungshülse (70) radial zwischengeordnet ist.

9. Elektromagnetische Vorrichtung nach Anspruch 8, **dadurch gekennzeichnet, daß** sich dem zweiten, nicht-ferromagnetischen Distanzring (38a) in axialer Richtung eine mit einer mittigen Durchgangsöffnung (82) versehene Polscheibe (8a) anschließt, welche in das Ventilgehäuse (12a) eingepreßt ist.

10. Elektromagnetische Vorrichtung nach Anspruch 9, **dadurch gekennzeichnet, daß** der zweite Magnetanker (10a) ein als Dichtstößel ausgebildetes zweites Ventilschließglied (20a) trägt, weiches sich durch die mittige Durchgangsöffnung (82) der Polscheibe (8a) hindurch bis zum Ventilsitz (28a) erstreckt.

11. Elektromagnetische Vorrichtung nach Anspruch 10, **dadurch gekennzeichnet, daß** das zweite Ventilschließglied (20a) derart lang ist, daß der zweite Magnetanker (10a) einen geringen axialen Abstand zur Polscheibe (8a) einhält, wenn das zweite Magnetventil (4a) geschlossen ist.

12. Elektromagnetische Vorrichtung nach einem der Ansprüche 8 bis 11, **dadurch gekennzeichnet, daß** bei elektrischer Erregung der zweiten Magnetspule (40a) der magnetische Kreis vom zweiten Magnetanker (10a) über die Polscheibe (8a), das Ventilgehäuse (12), die zweite Deckscheibe (36a) und die Führungshülse (70) geschlossen ist.

13. Elektromagnetische Vorrichtung nach Anspruch 1, **dadurch gekennzeichnet, daß** die Ventilsitzkörper (30, 30a) der ersten und zweiten Magnetventile (4, 4a) baugleich und jeweils mit dem Ventilsitz (28, 28a) einstückig ausgebildet sind.

14. Elektromagnetische Vorrichtung nach Anspruch 1, **dadurch gekennzeichnet, daß** die Ventilgehäuse (12, 12a) der ersten und zweiten Magnetventile (4, 4a) in den Aufnahmebohrungen (1, 1a) druck- und fluiddicht verstemmt sind.

## Claims

1. Electromagnetic device (6), in particular for a slip-controlled, hydraulic vehicle brake system, having at least a first solenoid valve (4) which is closed in its currentless basic position, and having at least a second solenoid valve (4a) which is open in its currentless basic position, the first and second solenoid valves (4, 4a) having a valve housing (12, 12a), being accommodated in receiving bores (1, 1a) of a valve block (2) and each having a valve closing element (20, 20a) which is controlled by a magnet armature (10, 10a) and which can move relative to a valve seat (28, 28a) which is supported by a valve seat carrier (30, 30a) and to a pole element (8, 8a), and each have a solenoid (40, 40a) which, in the electrically excited state, interacts with the magnet armature (10, 10a) in such a way that the first solenoid valve (4) is opened and the second solenoid valve (4a) is closed, **characterized in that** the first and second solenoid valves (4, 4a) have structurally identical, one-piece valve housings (12, 12a), in each of which all the solenoid valve components are accommodated essentially without an axial protrusion, and **in that** in each case the entire length of the first and second solenoid valves (4, 4a) is countersunk in the receiving bores (1, 1a) of the valve block (2), and **in that** a non-ferromagnetic spacing ring (38, 38a) is arranged between an end side, pointing to the valve seat (28, 28a), of at least one solenoid (40, 40a) and a dividing plane (41, 41a) which runs between the pole element (8, 8a) and the magnet armature (10, 10a) of the first and second solenoid valves (4, 4a).

2. Electromagnetic device according to Claim 1, **characterized in that** the first solenoid valve (4) has, at its head end, a pole core (8) which is adjoined by a first magnet armature (10) with axial spacing, said magnet armature (10) extending in an axially moveable fashion through the valve housing (12) and having, at its end side pointing away from the pole core (8), a first valve closing element (20) which is embodied as a sealing tappet and which, when the first solenoid valve (4) is closed, is pressed into the valve seat (28) by the pressure of a first valve spring (26) which is supported between the pole core (8) and the first magnet armature (10).

3. Electromagnetic device according to Claim 2, **characterized in that** a first non-ferromagnetic spacing ring (38) is arranged radially between valve housing (12) and the pole core (8) and projects axially beyond an end face, pointing to the first magnet armature (10), of the pole core (8) with an annular section (46) against which the first magnet armature (10) bears when the first solenoid valve (4) is opened.

4. Electromagnetic device according to Claims 2 and 3, **characterized in that** a first solenoid (40) is arranged axially between a first cover plate (36) which engages in a radially outer annular step (34) of the pole core (8) and the first non-ferromagnetic spacing washer (38), and is arranged radially between the valve housing (12) and the pole core (8).

5. Electromagnetic device according to Claim 4, **characterized in that**, when the first solenoid (40) is electrically excited, the solenoid circuit is closed by the pole core (8) by means of the first magnet armature (10), the valve housing (12) and the first cover plate (36).

6. Electromagnetic device according to one of the preceding claims, **characterized in that** the second solenoid valve (4a) has, at the head end, a guide sleeve (70) which is enclosed by the valve housing (12a) and is open in the downward direction and in which a second magnet armature (10a) is guided in an axially moveable fashion.

7. Electromagnetic device according to Claim 6, **characterized in that** the guide sleeve (70) engages with its open end in a radially inner annular step (72) of a second, non-ferromagnetic spacing ring (38a) whose end section (74) forms an axial guide extension of the guide sleeve (70).

8. Electromagnetic device according to Claim 7, **characterized in that** a second solenoid (40a) is arranged axially between a head-end cover plate (36a) which engages radially around the guide sleeve (70) and the second, non-ferromagnetic spacing ring (38a), and is arranged radially between the valve housing (12) and an initial section (76), containing the annular step (72), of the guide sleeve (70).

9. Electromagnetic device according to Claim 8, **characterized in that** a pole disc (8a) which is provided with a central through-opening (82) and which is pressed into the valve housing (12a) adjoins the second, non-ferromagnetic spacing ring (38a) in the axial direction.

10. Electromagnetic device according to Claim 9, **characterized in that** the second magnet armature (10a). is fitted with a second valve closing element (20a). which is embodied as a sealing tappet and which extends through the central through-opening (82) of the pole disc (8a) as far as the valve seat (28a).

11. Electromagnetic device according to Claim 10, **characterized in that** the second valve closing element (20a) is so long that the second magnet armature (10a) is still at a small axial distance from the polar disc (8a) when the second solenoid valve (4a) is closed.

12. Electromagnetic device according to Claims 8 to 11, **characterized in that**, when the second solenoid (40a) is electrically excited, the magnetic circuit is closed by the second magnet armature (10a) by means of the pole disc (8a), the valve housing (12), the second cover plate (36a) and the guide sleeve (70).

13. Electromagnetic device according to Claim 1, **characterized in that** the valve seat element (30, 30a) of the first and second solenoid valves (4, 4a) are structurally identical and are each embodied in one piece with the valve seat (28, 28a).

14. Electromagnetic device according to Claim 1, **characterized in that** the valve housings (12, 12a) of the first and second solenoid valves (4, 4a) are caulked in the receiving bores (1, 1a) in a pressure-tight and fluid-tight fashion.

## Revendications

1. Dispositif électromagnétique (6), en particulier pour une installation de freinage hydraulique de véhicule à régulation antipatinage, comprenant au moins une première soupape électromagnétique (4) fermée dans sa position de base sans courant et au moins une deuxième soupape électromagnétique (4a), ouverte dans sa position de base sans courant, les première et deuxième soupapes électromagnétiques (4, 4a) possédant un boîtier de soupape (12, 12a), étant contenues dans des perçages de logement (1, 1a) d'un bloc de soupape (2) et présentent chacune un organe de fermeture de soupape (20, 20a) commandé par une armature magnétique (10, 10a) mobile par rapport à un siège de soupape (28, 28a) porté par un support de siège de soupape (30, 30a) et en direction d'une pièce polaire (8, 8a), et chacune une bobine magnétique (40, 40a) qui, à l'état excité électriquement, coopère avec l'armature magnétique (10, 10a) de telle manière que la première soupape électromagnétique (4) soit ouverte et que la deuxième soupape électromagnétique (4a) soit fermée,
**caractérisé en ce que**
les première et deuxième soupapes électromagnétiques (4, 4a) présentent des boîtiers de soupape de même construction, d'une seule pièce (12, 12a) dans lesquels tous les éléments des soupapes électromagnétiques sont logés, sensiblement sans débordement axial, et **en ce que** la longueur des premières et deuxièmes soupapes électromagnétiques (4, 4a) est entièrement contenue dans les perçages de logement (1, 1a) du bloc de soupape (2), et **en ce qu'**entre une face frontale d'au moins une bobine magnétique (40, 40a) dirigée vers le siège de soupape (28, 28a) et un plan de séparation (41, 41a) qui s'étend entre la pièce polaire (8, 8a) et l'armature magnétique (10, 10a) de la première et de la deuxième soupapes électromagnétiques (4, 4a) est interposée une bague entretoise non ferromagnétique (38, 38a).

2. Dispositif électromagnétique selon la revendication 1,
**caractérisé en ce que**
la première soupape électromagnétique (4) présente, côté tête, un noyau polaire (8) auquel fait suite, à un certain espacement axial, une première armature magnétique (10) guidée de façon mobile dans la direction axiale par le boîtier de soupape (12), armature qui, sur sa face frontale, regarde dans le sens qui s'éloigne du noyau polaire (8) possède un premier organe de fermeture de soupape (20) constitué par une tige de fermeture étanche, enfoncée dans le siège de soupape (28) par la pression d'un premier ressort de soupape (26) qui prend appui entre le noyau polaire (8) et la première armature magnétique (10), lorsque la première soupape électromagnétique (4) est fermée.

3. Dispositif électromagnétique selon la revendication 2,
**caractérisé en ce qu'**
une première bague entretoise non ferromagnétique (38) est interposée radialement entre le boîtier de soupape (12) et le noyau polaire (8), bague qui déborde axialement au-delà d'une surface frontale du noyau polaire (8) dirigée vers la première armature magnétique (10) par un segment annulaire (46) contre lequel la première armature magnétique (10) s'appuie lorsque la première soupape électromagnétique (4) est ouverte.

4. Dispositif électromagnétique selon les revendications 2 et 3,
**caractérisé en ce qu'**
une première bobine magnétique (40) est interposée axialement entre un premier disque de recouvrement (36) engagé dans un épaulement annulaire radialement extérieur (34) du noyau polaire (8) et la première bague entretoise non ferromagnétique (38), ainsi qu'interposée radialement entre le boîtier de soupape (12) et le noyau polaire (8).

5. Dispositif électromagnétique selon la revendication 4,
**caractérisé en ce que**,
lors de l'excitation électrique de la première bobine magnétique (40), le circuit magnétique partant du noyau polaire (8) se referme en passant par la première armature magnétique (10), le boîtier de soupape (12) et le premier disque de recouvrement (36).

6. Dispositif électromagnétique selon une des revendications précédentes,
**caractérisé en ce que**
la deuxième soupape électromagnétique (4a) présente, côté tête, une douille de guidage (70) entourée par le boîtier de soupape (12a), ouverte vers le bas, et dans laquelle une deuxième armature magnétique (10a) est guidée mobile dans la direction axiale.

7. Dispositif électromagnétique selon la revendication 6,
**caractérisé en ce que**
la douille de guidage (70) est engagée par son extrémité ouverte dans un épaulement annulaire (72) radialement intérieur d'une deuxième bague entretoise non ferromagnétique (38a) dont le segment terminal (74) forme un prolongement de guidage axial de la douille de guidage (70).

8. Dispositif électromagnétique selon la revendication 7,
**caractérisé en ce qu'**
une deuxième bobine magnétique (40a) est interposée axialement entre un disque de recouvrement côté tête (36a) qui emboîte radialement la douille de guidage (70) et la deuxième bague entretoise non ferromagnétique (38a) ainsi qu'interposée radialement entre le boîtier de soupape (12) et un segment initial (76) de la douille de guidage (70) qui présente l'épaulement annulaire (72).

9. Dispositif électromagnétique selon la revendication 8,
**caractérisé en ce qu'**
un disque polaire (8a) muni d'une ouverture de passage centrale (82) fait suite à la deuxième bague entretoise non ferromagnétique (38a) dans la direction axiale, ce disque étant emmanché à force dans le boîtier de soupape (12a).

10. Dispositif électromagnétique selon la revendication 9,
**caractérisé en ce que**
la deuxième armature magnétique (10a) porte un deuxième organe de fermeture de soupape (20a) constitué par une tige de fermeture étanche, qui s'étend jusqu'au siège de soupape (28a) en traversant l'ouverture de passage centrale (82) du disque polaire (8a).

11. Dispositif électromagnétique selon la revendication 10,
**caractérisé en ce que**
le deuxième organe de fermeture de soupape (20a) est d'une longueur telle que la deuxième armature magnétique (10a) soit placée à un petit espacement axial du disque polaire (8a) lorsque la deuxième soupape électromagnétique (4a) est fermée.

12. Dispositif électromagnétique selon une des revendications 8 à 11,
**caractérisé en ce que**,
dans le cas d'excitation électrique de la deuxième bobine magnétique (40a), le circuit magnétique partant de la deuxième armature magnétique (10a) se referme en passant par le disque polaire (8a), le boîtier de soupape (12), le deuxième disque de recouvrement (36a) et la douille de guidage (70).

13. Dispositif électromagnétique selon la revendication 1,
**caractérisé en ce que**
les corps de siège de soupape (30, 30a) des première et deuxième soupapes électromagnétiques (4, 4a) sont de même construction et sont formés chacun d'un seul tenant avec le siège de soupape (28, 28a).

14. Dispositif électromagnétique selon la revendication 1,
**caractérisé en ce que**
les boîtiers de soupapes (12, 12a) des première et deuxième soupapes électromagnétiques (4, 4a) sont sertis dans les perçages de logement (1, 1a) pour former un joint étanche à la pression et au fluide.
